# EUROPEAN PATENT SPECIFICATION

(11) **EP 1 527 688 B1**
(45) Date of publication and mention of the grant of the patent: **20.02.2008**
(21) Application number: 04023460.1
(22) Date of filing: 01.10.2004
(51) Int. Cl.: A21C 1/06, A21C 1/14, B01F 7/04, B01F 15/06, B01F 15/02

(54) **Horizontal kneading machine for edible dough, particularly for oven-baked products**
Horizontale Knetmaschine für essbaren Teig, insbesondere für im Ofen gebackene Produkten
Pétrin horizontal pour pâte alimentaire, particulièrement pour produits cuits au four

(30) Priority: 03.11.2003 IT TO20030863
(43) Date of publication of application: 04.05.2005
(73) Proprietor: SANCASSIANO S.p.A., 12060 Roddi (Cuneo) (IT)
(72) Inventor: Drocco, Davide, 12051 Alba (Cuneo) (IT)
(74) Representative: Notaro, Giancarlo

(56) References cited:
- EP-A- 1 192 862
- EP-A- 1 342 501
- DE-A1- 3 626 732
- DE-A1- 4 100 557
- DE-U1- 8 610 461

## Description

The present invention relates to kneading machines for edible doughs, particularly for oven-baked products, of the type comprising a tank, and at least two kneading tools rotatable within the tank around two substantially horizontal and parallel axes.

Kneading machines having the above characteristics are also defined simply "horizontal kneading machines". Examples of machines of this kind are illustrated in the documents US-A-4 883 361, US-A-2 050 654, US-A-4 269 582. Such known devices use two counter-rotating kneading tools and typically work according to a continuous process.

A kneading machine as set forth in the preamble of claim 1 is known from DE 04 023 460 A1.

One of the objects of the present invention is to provide a horizontal kneading machine, able to be designed and built instead of as a "continuous" machine also, if desired, as a machine operating in batches, i.e. with a tank that is filled every time with the ingredients needed to obtain a determined quantity of mixture and which is emptied once the mixture is obtained, to allow working a new batch of mixture.

Another object of the present invention is to provide a horizontal kneading machine that is able to obtain a high quality mixture in a relatively short time.

The correct execution of the mixture is a critical problem, having to meet a multiplicity of needs. On the quality of the mixture depends to a considerable extent the very quality of the oven-baked products obtained by cooking the dough. It is wholly evident that it is necessary for the kneading action to take place in consistent fashion throughout the mixture mass. Moreover, it is essential for the kneading work to be maintained to a minimal value, i.e. for the efficiency of the machine to be very high. This is required for obvious energy savings needs and to limit stresses on the kneading tools, thus also influencing the sizing of the organs of the apparatus. Moreover, the kneading work is resolved in a transfer of corresponding energy to the mass of the dough, with a consequent rise in its temperature.

It should also be noted that it is beneficial for the dough to be "cut", i.e. divided by the kneading tools, during the kneading operation, because this action is important to activate the enzymatic reactions of the dough. However, this cutting action must not be obtained with a high speed of the kneading tools, which would entail an unacceptable increase in the kneading work and excessive stressing of the mixture mass.

Therefore, an additional object of the invention is to provide a horizontal kneading machine of the type set out above which gives rise to an action of cutting the mixture mass during the kneading operation, in order to allow an optimal development of the mixture, providing for contact with the atmosphere of ample surfaces of the mixture mass and further causing an action of stretching and opening the mixture which increases its oxygenation.

In view of achieving the above objects, the invention relates to a kneading machine having the features of claim 1.

The rotational movements of said arms around the respective axes of rotation are mutually synchronised, in such a way that the arms pass substantially simultaneously in the area of tangency of their theoretical cylinders, crossing each other with opposite directions of motion, because of the concurrent rotation of the two tools.

Thanks to the aforesaid characteristics, the kneading machine according to the invention is able to produce a mixture of excellent quality. This is due in particular to the cutting action whereto the mixture is subjected every time the two arms of the kneading tools pass in the tangency area of the respective theoretical cylinders, crossing each other with opposite directions of motion.
It should be noted that the provision of two kneading tools having the above characteristics has already been disclosed in the Applicant's prior European patent application EP 1 342 501 A2. This document protects the general principle of the arrangement described above of the kneading tools, independently of the type of machine. However, it illustrates, by way of example, an embodiment in which the two kneading tools are rotatable around two vertical axes around a cylindrical tank, which also has vertical axis.

The present invention essentially consists of the idea of applying the specific shape and mutual arrangement of the two kneading tools which was the subject of the previous European patent application identified above to a horizontal kneading machine, in order to obtain in combination, the advantages linked to obtaining the cutting effect described above with the specific advantages of a horizontal kneading machine. It should be noted in particular that the aforesaid application results in a horizontal kneading machine of new conception, having two kneading tools, both rotatable in the same direction, which are capable of operating both in a machine working in batches, and in a continuously working machine.

If the invention is applied to a horizontal kneading machine operating in batches, the kneading tank will preferably be provided with means for emptying it. In the case of a continuously operating machine, the tank will have elongated conformation, with one end that receives the ingredients of the mixture, or a pre-mixed product, and the opposite end with an outlet wherefrom a continuous loaf of mixture is emitted. In this case, the advance of the mixture along the tank is obtained not by effect of the kneading tools, but simply by effect of the thrust exerted by the new product which presses at the inlet of the machine.

Further advantageous characteristics of preferred embodiments of the machine according to the invention are set out in the appended claims.

The invention shall now be described with reference to the accompanying drawings, provided purely by way of non limiting example, in which:
- Figure 1 is partially sectioned end view of a preferred embodiment of the machine according to the invention,
- Figure 2 is a lateral view of the machine, also partially sectioned according to the line II-II of Figure 1,
- Figure 3 is a plan view, partially sectioned according to the line III-III of Figure 1,
- Figure 3A schematically shows the system for transmitting the rotation of the two kneading tools,
- Figures 4, 5 show two possible variants of the shape of the tank of the machine according to the invention and,
- Figures 6-9 show four different embodiments of the kneading tools of the machine according to the invention.

In the drawings, the reference number 1 globally designates a horizontal kneading machine, comprising a fixed support structure 2 which in the illustrated example includes a base 3 surmounted by a frame including columns 4 superiorly connected by cross members 5, 6.

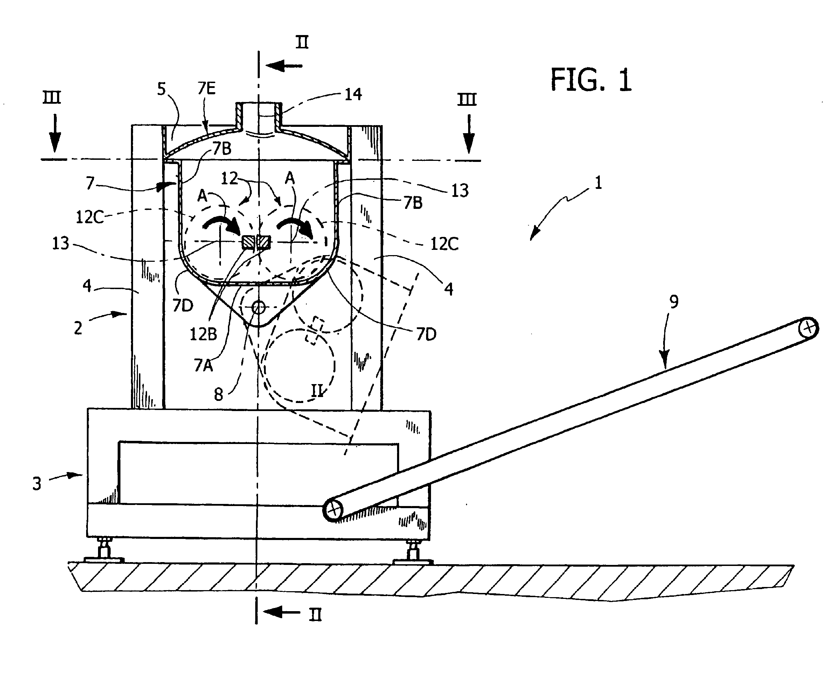

The fixed structure 2 supports a tank 7 for the mixture having a bottom wall 7a (which in the illustrated example is planar), the two longitudinal lateral walls 7B, planar and vertical, and two end walls 7C which are also planar and vertical and arranged in planes that are orthogonal to the planes of the longitudinal walls 7B. Naturally, the shape of the tank illustrated herein is merely an example of embodiment of the invention, said shape also being able to be wholly different from the preferred shape described herein. Still with reference to Figure 1, the bottom wall 7A is connected to the two longitudinal walls 7B by means of two curved walls 7D, with substantially circular profile.

The example of machine illustrated herein refers to the case of a machine destined to operate in batches, i.e. in which the kneading tank is emptied of the kneaded product at the end of the kneading cycle, thereby being readied to receive the product necessary for a new mixture. Consequently, in the illustrated example, the kneading tank is provided with means able to empty it of its content. By way of example, again the case illustrated herein, the tank 7 is supported for this purpose on the fixed structure 2 in oscillating fashion around a longitudinal axis 8 and it is therefore movable between a normal operative condition, illustrated in solid lines in Figure 1, and a rotated condition (illustrated with dashed line in Figure 1) in which the product contained in the tank is poured on a conveyor belt 9 which carries the kneaded product towards the discharge of the machine. Naturally, in theory any other means for emptying the tank can be provided.

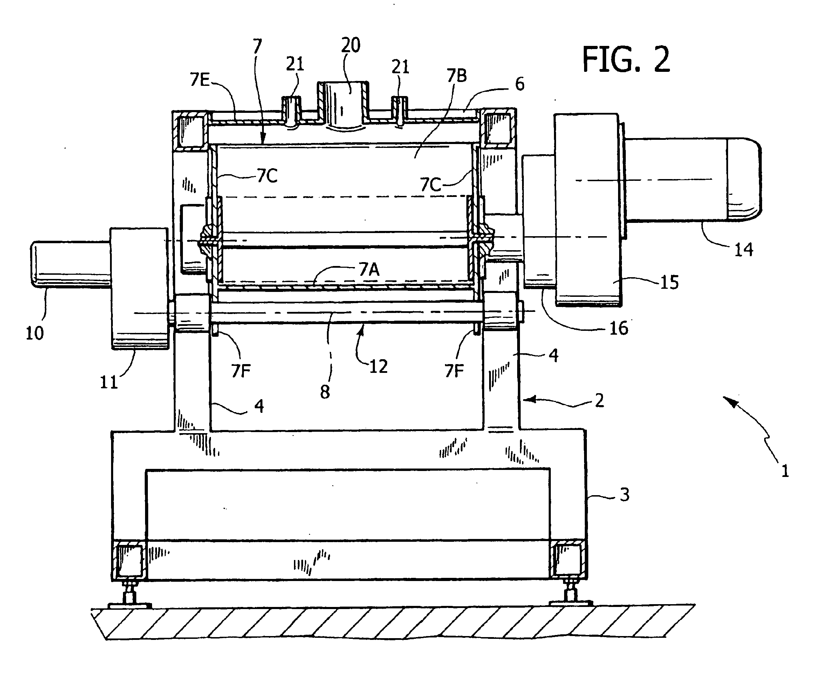

As shown in Figure 2, to the fixed structure 2 is anchored a command assembly including an electric motor 10 and a reduction set 11 for actuating a shaft 12 which is mounted rotatable on the fixed structure 2 around the axis 8 of tilt of the tank. The structure of the tank is anchored to the shaft 8, by means of flanges 7F (Figure 2) in such a way that a rotation of the motor 10 causes a consequent oscillation of the tank between its operative position and its tilted position.

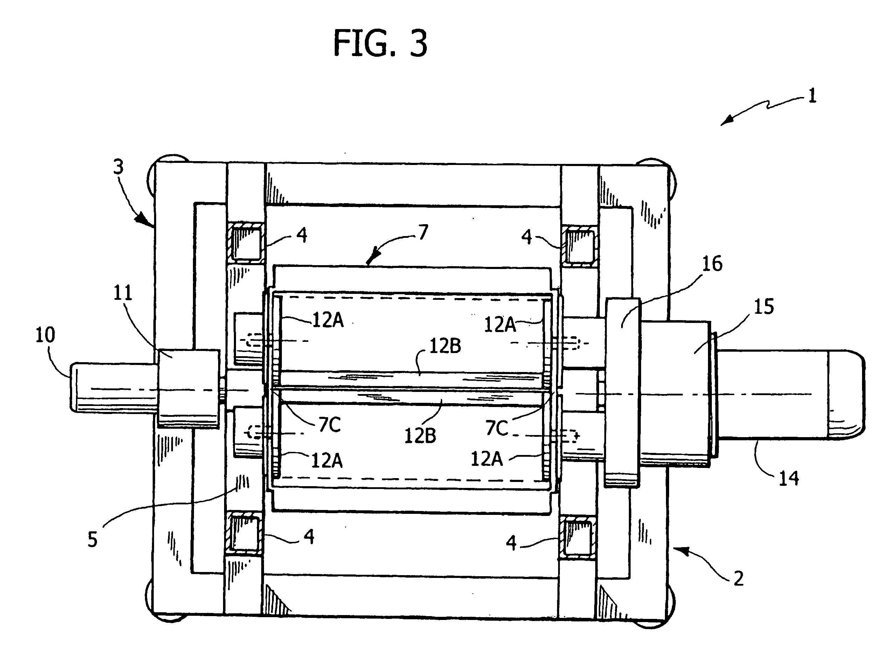

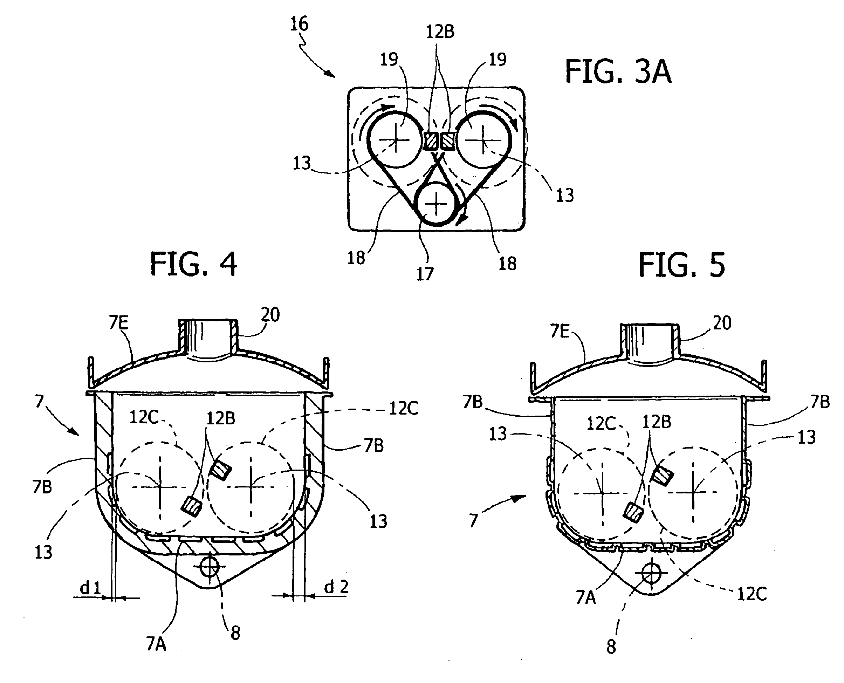

The structure of the tank 7 supports two kneading tools 12 in rotatable fashion around the two horizontal axes 13 positioned symmetrically to the two sides of the longitudinal median plane 14 (Figure 1) of the tank 7. Each of the kneading tools 12 comprises two end disks 12A orthogonal to the respective axis 13 and having hubs mounted rotatable around the axis 13 on the respective end walls 7C of the tank 7. Preferably, contrary to what is illustrated herein, each disk is positioned within a recessed cavity of the respective wall 7C, in such was as not to project into the cavity of the wall. The two end disks 12A of each kneading tool 12 are mutually joined by a longitudinal arm 12B which in the illustrated example has a substantially quadrangular section and which extends in a rectilinear direction parallel to the horizontal axes of rotation 13. The rotation of the two kneading tools 12 is actuated by an electric motor 14 by means of a reduction set 15 and a gearbox 16, shown in section view in Figure 3A. The rotation of the output shaft of the gearmotor set 14, 15 is transmitted by a pulley 17 which keyed on said output shaft to two pulleys 19 keyed on end shafts connected to the two kneading tools 12, by means of two belts 18. As shown in the drawings, the rotation of each kneading tools therefore causes an orbital motion of each arm 12B around the respective axis of rotation 13. During said movement, each arm 12B therefore describes a theoretical cylinder 12C with its axis coinciding with the axis of rotation 13. The two theoretical cylinders 12C of the two kneading tools are substantially tangential to each other (Figure 1). Moreover, in the case of the preferred embodiment illustrated herein, the two theoretical cylinders 12 are also both tangential to the bottom wall 7A of the tank 7. Lastly, again in the case of the illustrated embodiment, the curved walls 7D can be substantially concentric and immediately adjacent to the two theoretical cylinders 12C of the kneading tools 12.

A further important characteristic of the invention resides in the fact that the means for actuating the kneading tools are arranged to actuate a synchronised rotation of the two tools 12 in the same direction (see arrows A in Figure 1). Moreover, in the case of the preferred embodiment, the two arms 12B are mutually "in phase" so they reach in substantially simultaneous fashion the area of tangency of the two theoretical cylinders 12C of the kneading tools. Therefore, during the operation of the machine, at each rotation turn of the kneading tools the two arms 12 B cross each other simultaneously in the area of tangency of the two theoretical cylinders 12C with opposite directions of motion (due to the rotation of the two tools in the same direction) which gives rise to a cutting and opening action on the mixture which produces benefits discussed in the preamble of the present description.

Naturally, it would also be possible to provide for the phase of the two tools 12 to be such that the arms 12B reach the area of tangency of the two theoretical cylinders 12B at non-coinciding, but close times. Lastly, means can be provided for a regulation of the mutual phase of the rotations of the two tools 12.

Still with reference to Figures 1, 2, the tank 7 is preferably provided with a lid 7E which is provided with manifolds 20, 21 for the introduction of the ingredients needed for the mixture. Use of a lid also allows to connect the cavity inside the tank to a source of vacuum or pressure if the mixture is to be obtained in a vacuum or under pressure, according to a known technique.

Figure 4 shows an embodiment of the tank 7 in which the wall of the tank includes a cooling jacket in which a cooling fluid is made to circulate in order to control the temperature of the kneaded product. As shown in said figure, as well as in Figure 1, in this embodiment the distances d1 and d2 of the two theoretical cylinders 12C from the lateral walls 7B are different. Figure 5 shows a variant, in which the distances d1 and d2 are substantially identical and the two theoretical cylinders 12C are tangential respectively to the two longitudinal lateral walls 7B.

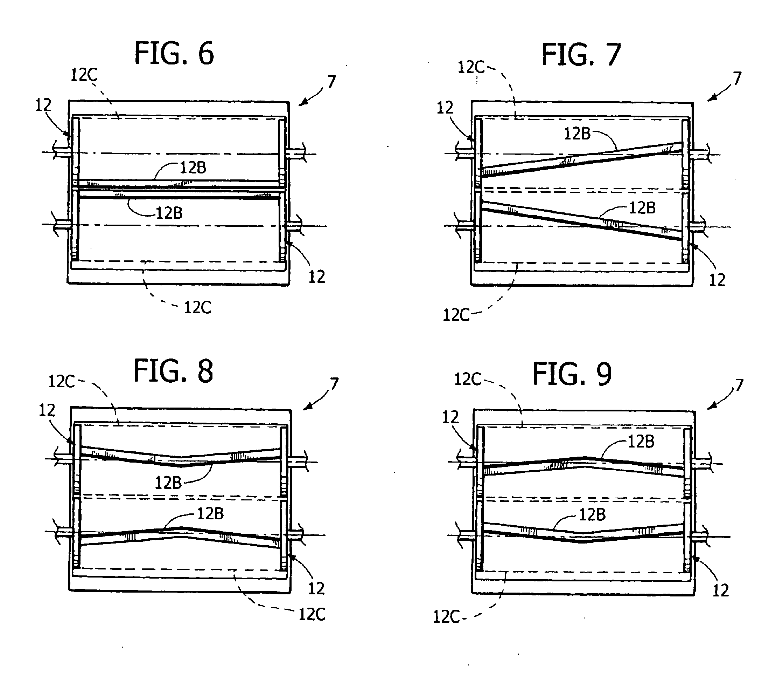

Figure 6 schematically shows a plan view of the kneading tank 7, with the two kneading tools 12. Figure 7 shows a variant in which each of the arms 12B instead of extending in rectilinear direction along a generatrix of the respective theoretical cylinder 12C, as in Figure 6, extends according to a rectilinear direction inclined relative to the generatrix.

Thanks to the inclined arrangement shown in Figure 7 of the two arms 12B, the cutting action exerted by the kneading tools 12 on the mixture on the occasion of each crossing of the two arms 12B is more progressive and similar to a "scissors" effect. The counterpart of said advantage is that the inclined arrangement of the arms gives rise to a thrusting action exerted by the kneading tool on the dough in the direction of an end of the tank.

Figures 8, 9 show two additional variants in which the kneading arms 12B have a broken line profile with two segments inclined in opposite directions. Said positions have the advantage of preserving the progressive effect of the cutting action, characteristic of the solution of Figure 7 without introducing thrusting actions on the dough in the axial direction, since the effects produced by the two differently inclined portions of each arm 12B offset each other. The solutions of Figures 8, 9 differ from each other because the aforesaid broken line defines an arrow oriented in the direction of rotation of the tool or in the opposite direction.

During the operation of the machine according to the invention, the products needed for the mixture are introduced into the kneading tank through the manifolds 20, 21, whereupon the two kneading tools 12 are set in synchronous and concurrent rotation by means of the motor 14, the reduction unit 15 and the gearbox 16. Naturally, the arrangement of the gearbox 16 described above is provided herein purely by way of example, since for example a gear transmission or any other type of transmission can be provided. Following the rotation of the kneading tools, the mixture is obtained. Every time the two arms 12B cross in correspondence with the area of tangency between the two theoretical cylinders 12C, the dough is "cut" and opened, achieving the benefits discussed above. At the end of the kneading step, the kneading tools are stopped and the motor 10 is activated to discharge the obtained mixture on the conveyor belt 9.

An identical configuration could also be adopted for a machine able to operate continuously. In this case, the kneading tank would be provided at one end of the tank of a manifold to feed the ingredients of the mixture or a pre-mixed product, and at the opposite end would be provided an outlet for discharging the kneaded mixture, e.g. on a conveyor belt. In operation, the same thrust exerted by the product entering the tank 7 would produce the advance of the mixture along the tank until it exits at the opposite end. In this way, a continuous loaf of mixture could be obtained at the outlet of the machine.

In theory, a variant using more than two kneading tools, parallel and side by side and co-operating with each other could also be provided. In regard to the solutions of Figure 7, 8 and 9, in which the arms 12B are arranged according to inclined directions, the inclination relative to the generatrix of the theoretical cylinder 12B can be in order of a few degrees (e.g. 4.5°) and in any case it is preferably not greater than 10°. The expression "slightly inclined" when used in the appended claims shall therefore be construed to indicate an angle not noticeably greater than 10°.

The section of each of the arms 12B is preferably quadrangular, but it can naturally also have different conformation. Lastly, the materials suitable for the construction of the kneading tools and of the tank will be chosen by those skilled in the art according to the notions generally known in the field. In a typical example, the two kneading tools are made of stainless steel.

Naturally, without altering the principle of the invention, the construction details and the embodiments may vary widely from what is described and illustrated purely by way of example herein, without thereby departing from the scope of the present invention.

For example, each kneading arm could have a slightly helical profile.

## Claims

1. A kneading machine comprising:
- a tank (7), and
- at least two kneading tools (12) rotatable inside the tank (7) around two substantially horizontal and parallel axes (13),
wherein:
- the two kneading tools (12) define, with their rotation, two theoretical cylinders (12C), ,
- each kneading tool (12) has at least one arm (12B),
- said tank (7) has a bottom (7A) to which the theoretical cylinders (12C) of the two kneading tools (12) are tangential, and two substantially vertical longitudinal lateral walls (7B), both theoretical cylinders (12C) of the kneading tools being tangential to a respective longitudinal lateral wall (7B),
- each longitudinal lateral wall (7B) of the tank (7) is joined with the aforesaid bottom (7A) of the tank by means of a portion of curved wall (7D) which is substantially coaxial and immediately adjacent to a respective theoretical cylinder (12C),
- said at least one arm (12B) extends substantially on the periphery of the respective theoretical cylinder (12C), so that said arm (12B) performs a rotational movement around the respective axis of rotation (13),
- the two kneading tools (12) are rotatable around said axes (13) with concurring directions of rotation, and the two theoretical cylinders are substantially tangential to each other, **characterized in that**, and each arm (12B), at least for a substantial part of its length, is substantially rectilinear and positioned along a direction that substantially coincides with a generatrix of the respective theoretical cylinder (12C), or is inclined relative to said generatrix by an angle not greater than 10°,
**in that** said kneading machine comprises means (14,15,16) for actuating the concurrent rotations of the two kneading tools (12) around the respective axes of rotation (13), for causing the arms (12B) to have rotational motions around the respective axes of rotation (13) which are mutually synchronised, in such a way that the arms (12B) of the two tools (12) pass substantially simultaneously in the area of tangency of the respective theoretical cylinders (12C), crossing each other with opposite directions of motion, so as to give rise to a cutting and opening action on then mixture.

2. Kneading machine as claimed in claim 1, **characterised in that** the two aforesaid theoretical cylinders (12C) have substantially equal diameter and substantially equal axial dimension, and **in that** the velocities of rotation of the two arms (12B) are also substantially equal.

3. Kneading machine as claimed in claim 1, **characterised in that** said tank (7) has a longitudinal median plane (14), two longitudinal lateral walls (7B) positioned at equal distance from said longitudinal median plane (14) and **in that** the two axes of rotation (13) of the two kneading tools are also positioned at equal distance from said longitudinal median plane (14).

4. Kneading machine as claimed in claim 1, **characterised in that** the two theoretical cylinders (12C) have a diameter that is substantially equal to the distance of each lateral longitudinal wall (7B) of the tank (7) from the longitudinal median plane (14) of the tank (7).

5. Kneading machine as claimed in claim 1, **characterised in that** the two theoretical cylinders (12C) are distanced from the respective lateral walls of the tank by two mutually different distances (d1,d2).

6. Kneading machine as claimed in any of the previous claims, **characterised in that** said tank (7) is provided with a lid (7E) including manifolds (20,21) for the introduction of the ingredients needed for the mixture.

7. Kneading machine as claimed in claim 6, **characterised in that** it is adapted to connect the inner cavity of the tank (7) with a source of vacuum or of pressure.

8. Kneading machine as claimed in claim 1, **characterised in that** the wall of the tank (7) includes a cooling jacket for the circulation of a cooling fluid.

9. Kneading machine as claimed in claim 1, **characterised in that** the two kneading arms (12B) have respective cutting edges which are mutually opposite when the two arms cross each other.

10. Kneading machine as claimed in claim 1, **characterised in that** the kneading arms (12B) have a section with quadrangular shape.

11. Kneading machine as claimed in any of the previous claims, **characterised in that** the machine is adapted for batch operation and it is provided with means for emptying the tank (7).

12. Kneading machine as claimed in claim 11, **characterised in that** said emptying means provide means for supporting the tank (7) in movable fashion between a position of normal use and an upset position for discharging the kneaded product.

13. Kneading machine as claimed in claim 11, **characterised in that** said emptying means include means for supporting the tank (7) in swivelling fashion around a longitudinal axis (8) parallel to the longitudinal direction of the tank, and motor means (10, 11) to actuate a rotation of the tank around said axis of rotation (8), between the position of normal use and the position for discharging the product.

14. Kneading machine as claimed in any of the previous claims, **characterised in that** each kneading arm (12B) is connected at its ends to two disks (12A) coaxial with the axis of rotation (13) of the kneading tool and mounted rotatable on two end walls (7C) of the tank (7).

15. Kneading machine as claimed in any of the previous claims, **characterised in that** each kneading arm is arranged according to a direction which is inclined, relative to a generatrix of the respective theoretical cylinder (12C), by an angle of between 0° and 10°

16. Kneading machine as claimed in any of the previous claims, **characterised in that** each kneading arm (12B) is arranged according to a broken line with two portions having an equal or opposite inclination relative to a generatrix of the respective theoretical cylinder (12C).

17. Kneading machine as claimed in claim 1, **characterised in that** the aforesaid broken line defines an arrow oriented in the direction of rotation of the kneading tool.

18. Kneading machine as claimed in claim 16, **characterised in that** the aforesaid broken line defines an arrow oriented in a direction contrary to the direction of rotation of the kneading tool.

19. Kneading machine as claimed in claim 1, **characterised in that** it is adapted for continuous operation, with an elongated tank (7) having an end for loading the ingredients necessary for the mixture or a pre-mixed product, and an opposite end for discharging the kneaded product, and **in that** the advance of the product along the tank is determined by the thrust exerted by the product entering the tank.

## Patentansprüche

1. Knetmaschine die umfasst:
einen Behälter (7), und
wenigstens zwei Knetwerkzeuge (12), die im Inneren des Behälters (7) um zwei im Wesentlichen horizontale und parallele Achsen (13) herum gedreht werden können,
wobei:
- die zwei Knetwerkzeuge (12) mit ihrer Drehung zwei theoretische Zylinder (12C) bilden,
- jedes Knetwerkzeug (12) wenigstens einen Arm (12B) hat,
- der Behälter (7) einen Boden (7A), den die theoretischen Zylinder (12C) der zwei Knetwerkzeuge (12) tangieren, und zwei im Wesentlichen vertikale Längsseitenwände (7B) hat, wobei beide theoretischen Zylinder (12C) der Knetwerkzeuge eine entsprechende Längsseitenwand (7B) tangieren,
- jede Längsseitenwand (7B) des Behälters (7) mit dem Boden (7A9 des Behälters mittels eines Abschnitts einer gekrümmten Wand (7D) verbunden ist, der im Wesentlichen koaxial zu einem entsprechenden theoretischen Zylinder (12C) ist und unmittelbar an ihn angrenzt,
- wobei sich der wenigstens eine Arm (12B) im Wesentlichen am Umfang des jeweiligen theoretischen Zylinders (12C) erstreckt, so dass der Arm (12B) eine Drehbewegung um die jeweilige Drehachse (13) herum durchführt,
- die zwei Knetwerkzeuge (12) um die Achsen (13) herum mit gleichlaufenden Drehrichtungen gedreht werden können, und die zwei theoretischen Zylinder einander im Wesentlichen tangieren,
**dadurch gekennzeichnet, dass**
jeder Arm (12B) über wenigstens einen wesentlichen Teil seiner Länge im Wesentlichen geradlinig und in einer Richtung positioniert ist, die im Wesentlichen mit einer Erzeugenden des jeweiligen theoretischen Zylinders (12C) übereinstimmt, oder relativ zu der Erzeugenden um einen Winkel von nicht mehr als 10° geneigt ist, und
dass die Knetmaschine Einrichtungen (14,15,16) umfasst, die die gleichlaufenden Drehungen der zwei Knetwerkzeuge (12) um die jeweiligen Drehachsen (13) herum auslösen und bewirken, dass die Arme (12B) Drehbewegungen um die jeweiligen Drehachsen (13), die zueinander synchronisiert sind, so ausführen, dass die Arme (12B) der zwei Werkzeuge (12) im Wesentlichen gleichzeitig den Tangentialbereich der jeweiligen theoretischen Zylinder (12C) durchlaufen und einander mit entgegengesetzten Bewegungsrichtungen schneiden, um einen Schneid- und Öffnungsvorgang an dem Gemisch zu verursachen.

2. Knetmaschine nach Anspruch 1, **dadurch gekennzeichnet, dass** die zwei theoretischen Zylinder (12C) im Wesentlichen gleichen Durchmesser und im Wesentlichen gleiche axiale Ausdehnung haben, und dass die Drehgeschwindigkeiten der zwei Arme (12B) ebenfalls im Wesentlichen gleich sind.

3. Knetmaschine nach Anspruch 1, **dadurch gekennzeichnet, dass** der Behälter (7) eine Längs-Mittelebene (14) und zwei Längsseitenwände (7B) hat, die in gleichem Abstand zu der Längs-Mittelebene (14) positioniert sind, und dass die zwei Drehachsen (13) der zwei Knetwerkzeuge ebenfalls in gleichem Abstand zu der Längs-Mittelebene (14) positioniert sind.

4. Knetmaschine nach Anspruch 1, **dadurch gekennzeichnet, dass** die zwei theoretischen Zylinder (12C) einen Durchmesser haben, der im Wesentlichen dem Abstand jeder Längsseitenwand (7B) des Behälters (7) zu der Längs-Mittelebene (14) des Behälters (7) gleich ist.

5. Knetmaschine nach Anspruch 1, **dadurch gekennzeichnet, dass** die zwei theoretischen Zylinder (12C) von den jeweiligen Seitenwänden des Behälters um voneinander verschiedene Abstände (d1, d2) entfernt sind.

6. Knetmaschine nach einem der vorangehenden Ansprüche, **dadurch gekennzeichnet, dass** der Behälter (7) mit einem Deckel (7E) versehen ist, der Verteiler (20, 21) zum Einleiten der für das Gemisch benötigten Zutaten enthält.

7. Knetmaschine nach Anspruch 6, **dadurch gekennzeichnet, dass** sie so eingerichtet ist, dass der innere Hohlraum des Behälters (7) mit einer Quelle von Vakuum oder Druck verbunden wird.

8. Knetmaschine nach Anspruch 1, **dadurch gekennzeichnet, dass** die Wand des Behälters (7) einen Kühlmantel zur Zirkulation eines Kühlfluids enthält.

9. Knetmaschine nach Anspruch 1, **dadurch gekennzeichnet, dass** die zwei Knetarme (12B) jeweilige Schneidkanten haben, die einander gegenüberliegen, wenn die zwei Arme einander schneiden.

10. Knetmaschine nach Anspruch 1, **dadurch gekennzeichnet, dass** die Knetarme (12B) einen Querschnitt mit viereckiger Form haben.

11. Knetmaschine nach einem der vorangehenden Ansprüche, **dadurch gekennzeichnet, dass** die Maschine für Chargenbetrieb eingerichtet ist und mit einer Einrichtung zum Entleeren des Behälters (7) versehen ist.

12. Knetmaschine nach Anspruch 11, **dadurch gekennzeichnet, dass** die Entleerungseinrichtung eine Einrichtung zum beweglichen Tragen des Behälters (7) zwischen einer normalen Funktionsposition und einer umgedrehten Position zum Ausleeren des gekneteten Erzeugnisses aufweist.

13. Knetmaschine nach Anspruch 11, **dadurch gekennzeichnet, dass** die Entleerungseinrichtung eine Einrichtung zum schwenkbaren Tragen des Behälters (7) um eine Längsachse (8), parallel zu der Längsrichtung des Behälters sowie eine Motoreinrichtung (10, 11) zum Auslösen einer Drehung des Behälters um die Drehachse (8) herum zwischen der normalen Funktionsposition und der Position zum Ausleeren des Erzeugnisses enthält.

14. Knetmaschine nach einem der vorangehenden Ansprüche, **dadurch gekennzeichnet, dass** jeder Knetarm (12B) an seinen Enden mit zwei Scheiben (12A) koaxial zu der Drehachse (13) des Knetwerkzeugs verbunden und drehbar an zwei Abschlusswänden (7C) des Behälters (7) angebracht ist.

15. Knetmaschine nach einem der vorhergehenden Ansprüche, **dadurch gekennzeichnet, dass** jeder Knetarm in einer Richtung angeordnet ist, die relativ zu einer Erzeugenden des jeweiligen theoretischen Zylinders (12C) um einen Winkel zwischen 0 ° und 10 ° geneigt ist.

16. Knetmaschine nach einem der vorangehenden Ansprüche, **dadurch gekennzeichnet, dass** jeder Knetarm (12B) entsprechend einer geknickten Linie mit zwei Abschnitten angeordnet ist, die eine gleiche oder entgegengesetzte Neigung relativ zu einer Erzeugenden des jeweiligen theoretischen Zylinders (12C) haben.

17. Knetmaschine nach Anspruch 1, **dadurch gekennzeichnet, dass** die geknickte Linie einen Pfeil bildet, der in der Drehrichtung des Knetwerkzeugs ausgerichtet ist.

18. Knetmaschine nach Anspruch 16, **dadurch gekennzeichnet, dass** die geknickte Linie einen Pfeil bildet, der in einer Richtung entgegengesetzt zur Drehrichtung des Knetwerkzeugs ausgerichtet ist.

19. Knetmaschine nach Anspruch 1, **dadurch gekennzeichnet, dass** sie für kontinuierlichen Betrieb mit einem länglichen Behälter (7) eingerichtet ist, der ein Ende zum Zuführen der für das Gemisch erforderlichen Zutaten oder eines vorgemischten Erzeugnisses und ein gegenüberliegendes Ende zum Ausleeren des gekneteten Erzeugnisses aufweist, und dass die Vorwärtsbewegung des Erzeugnisses in dem Behälter durch den Schub bestimmt wird, der von dem in den Behälter eintretenden Erzeugnis ausgeübt wird.

## Revendications

1. Pétrin comprenant:
- une cuve (7), et
- au moins deux outils pétrisseurs (12) rotatifs à l'intérieur de la cuve (7) autour de deux axes sensiblement parallèles et horizontaux (13),
dans lequel :
- les deux outils pétrisseurs (12) définissent, avec leur rotation, deux cylindres théoriques (12C),
- chaque outil pétrisseur (12) présente au moins un bras (12B),
- la cuve (7) possède un fond (7A) par rapport auquel les cylindres théoriques (12C) des deux outils pétrisseurs (12) sont tangents, et deux parois latérales longitudinales (7B) sensiblement verticales, les deux cylindres théoriques (12C) des outils pétrisseurs étant tangents à une paroi latérale longitudinale (7B) respective,
- chaque paroi latérale longitudinale (7B) de la cuve (7) est reliée audit fond (7A) de la cuve au moyen d'une partie de paroi incurvée (7D), qui est disposée de manière sensiblement coaxiale et immédiatement adjacente par rapport à un cylindre théorique respectif (12C),
- ledit au moins un bras (12B) s'étend sensiblement à la périphérie du cylindre théorique (12C) respectif, de sorte que le bras (12B) effectue un mouvement de rotation autour de l'axe respectif de rotation (13),
- les deux outils pétrisseurs (12) sont rotatifs autour desdits axes (13) avec des sens de rotation identiques, et les deux cylindres théoriques sont sensiblement tangents l'un par rapport à l'autre,
**caractérisé en ce que**
- chaque bras (12B), au moins pour une partie substantielle de sa longueur, est sensiblement rectiligne et positionné le long d'une direction qui coïncide sensiblement avec une génératrice du cylindre théorique respectif (12C), ou est incliné par rapport à ladite génératrice suivant un angle inférieur ou égal à 10°, et
**en ce que** ledit pétrin comprend des moyens (14, 15, 16) pour actionner les rotations simultanées des deux outils pétrisseurs (12) autour des axes respectifs de rotation (13), pour obliger les bras (12B) à réaliser des mouvements de rotation autour des axes respectifs de rotation (13) qui sont mutuellement synchronisés, de telle manière que les bras (12B) des deux outils (12) passent de manière sensiblement simultanée dans la région de tangence des cylindres théoriques respectifs (12C), se croisant l'un l'autre avec des sens de mouvement opposés, de façon à donner lieu à une action de découpe et d'ouverture sur le mélange.

2. Pétrin selon la revendication 1, **caractérisé en ce que** lesdits deux cylindres théoriques (12C) présentent des diamètres sensiblement égaux et des dimensions axiales sensiblement égales, et **en ce que** les vitesses de rotation des deux bras (12B) sont également sensiblement égales.

3. Pétrin selon la revendication 1, **caractérisé en ce que** ladite cuve (7) présente un plan médian longitudinal (14), deux parois latérales longitudinales (7B) positionnées à égale distance dudit plan médian longitudinal (14) et **en ce que** les deux axes de rotation (13) des deux outils pétrisseurs sont également positionnés à égale distance dudit plan médian longitudinal (14).

4. Pétrin selon la revendication 1, **caractérisé en ce que** les deux cylindres théoriques (12C) présentent un diamètre qui est sensiblement égal à la distance entre chaque paroi latérale longitudinale (7B) de la cuve (7) et le plan médian longitudinal (14) de la cuve (7).

5. Pétrin selon la revendication 1, **caractérisé en ce que** les deux cylindres théoriques (12C) sont séparés des parois latérales respectives de la cuve par deux distances mutuellement différentes (d1, d2).

6. Pétrin selon l'une quelconque des revendications précédentes, **caractérisé en ce que** ladite cuve (7) est pourvue d'un couvercle (7E) comprenant des collecteurs (20, 21) pour l'introduction des ingrédients nécessaires pour le mélange.

7. Pétrin selon la revendication 6, **caractérisé en ce qu'**il est adapté pour relier la cavité interne de la cuve (7) à une source de vide ou de pression.

8. Pétrin selon la revendication 1, **caractérisé en ce que** la paroi de la cuve (7) comprend une enveloppe réfrigérante pour la circulation d'un liquide réfrigérant.

9. Pétrin selon la revendication 1, **caractérisé en ce que** les deux bras pétrisseurs (12B) présentent des arêtes tranchantes respectives qui sont mutuellement opposées lorsque les deux bras se croisent.

10. Pétrin selon la revendication 1, **caractérisé en ce que** les bras pétrisseurs (12B) présentent une section de forme quadrangulaire.

11. Pétrin selon l'une quelconque des revendications précédentes, **caractérisé en ce que** le pétrin est adapté à un fonctionnement par lots et **en ce qu'**il est pourvu de moyens pour vider la cuve (7).

12. Pétrin selon la revendication 11, **caractérisé en ce que** lesdits moyens de vidange comportent des moyens pour servir de support au réservoir (7) de manière mobile entre une position d'utilisation normale et une position renversée pour évacuer le produit pétri.

13. Pétrin selon la revendication 11, **caractérisé en ce que** les moyens de vidange comprennent des moyens pour servir de support à la cuve (7) de manière orientable autour d'un axe longitudinal (8) parallèle au sens longitudinal de la cuve, et des moyens motorisés (10, 11) pour actionner une rotation de la cuve autour dudit axe de rotation (8), entre la position d'utilisation normale et la position d'évacuation du produit.

14. Pétrin selon l'une quelconque des revendications précédentes, **caractérisé en ce que** chaque bras pétrisseur (12B) est relié au niveau de ses extrémités à deux disques (12A) disposés de manière coaxiale avec l'axe de rotation (13) de l'outil pétrisseur et montés de manière rotative sur deux parois terminales (7C) de la cuve (7).

15. Pétrin selon l'une quelconque des revendications précédentes, **caractérisé en ce que** chaque bras pétrisseur est disposé selon une direction qui est inclinée, par rapport à une génératrice du cylindre théorique respectif (12C), suivant un angle compris entre 0° et 10°.

16. Pétrin selon l'une quelconque des revendications précédentes, **caractérisé en ce que** chaque bras pétrisseur (12B) est disposé selon une ligne brisée avec deux parties présentant une inclinaison égale ou opposée par rapport à une génératrice du cylindre théorique respectif (12C).

17. Pétrin selon la revendication 1, **caractérisé en ce que** ladite ligne brisée définit une flèche orientée dans le sens de rotation de l'outil pétrisseur.

18. Pétrin selon la revendication 16, **caractérisé en ce que** ladite ligne brisée définit une flèche orientée dans un sens contraire au sens de rotation de l'outil pétrisseur.

19. Pétrin selon la revendication 1, **caractérisé en ce qu'**il est adapté à un fonctionnement continu, avec une cuve allongée (7) présentant une extrémité pour charger les ingrédients nécessaires pour le mélange ou un produit pré-mélangé, et une extrémité opposée pour évacuer le produit pétri, et **en ce que** la progression du produit le long de la cuve est déterminée par la poussée axiale exercée par le produit entrant dans la cuve.
